# EUROPEAN PATENT APPLICATION

(11) **EP 0 954 129 A1**
(43) Date of publication of application: **03.11.1999**
(21) Application number: 98401071.0
(22) Date of filing: 30.04.1998
(51) Int. Cl.: H04B 14/06

(54) **Method and device for adaptive differential pulse code modulation.**

(71) Applicant: ALCATEL, 75008 Paris (FR)
(72) Inventor: Hernandez Gamazo, José Miguel, 28005 Madrid (ES); Amengual Guedan, Juan, 28230 Las Rozas (ES)
(74) Representative: Feray, Valérie

(57) **Abstract**

Method of adaptive differential pulse code modulation, ADPCM, which fundamentally satisfies the recommendations G.726 or G.727 of the CCITT, being implemented in an ADPCM encoder whereby, given an input sample, a quantified difference signal (DQ) is obtained by subtracting from the input sample an estimated value of this sample, the estimated signal (SE), whereby a feedback loop is formed which includes a prediction module (27). The prediction module (27) calculates, in the preceding frame, the estimated signal (SE) and a partial estimated signal of the sixth order prediction for the current frame sample. Consequently these operations are carried out in parallel with other of the algorithm, resulting in an overall speeding up of the encoding process.

## Description

### OBJECT OF THE INVENTION

This invention concerns a method and device for adaptive differential pulse code modulation, ADPCM, being applicable to interface units of a digital transmission system that employs ADPCM encoding and decoding in accordance with the transcoding algorithms of CCITT Recommendations G.726 or G.727, being of particular, but not exclusive, application in DECT digital enhanced cordless telecommunications system.

### STATE OF TECHNOLOGY

Telephone exchanges serve to connect one subscriber line to another or, by means of a trunk, with another telephone exchange. The trunk connections can made directly over wire pairs or by means of a first stage to convert a conversation to pulse code modulation PCM over one transmit circuit and another receive circuit for every 30 channels. The digital exchanges work with the PCM samples, one every 125 µs, which the PCM encoders have obtained from each conversation.

There are however trunks which transmit digital signals that have been converted to adaptive differential pulse code modulation ADPCM, being processed in a ADPCM encoder, in accordance with the CCITT Recommendations G.726 or G.727; consequently they generate a ADPCM signal that is transmitted over the telephone network. Before it can be listened to by a subscriber, this ADPCM signal is decoded in a ADPCM decoder, which produces a digital PCM signal that is converted to analogue form by means of a PCM decoder, in order to be heard by the subscriber through the earpiece of his telephone set.

The ADPCM encoder receives an input signal, PCM code word, and obtains a difference signal by subtracting an estimate of this signal from the input signal. This signal is applied to an adaptive quantifying module that generates the ADPCM output signal of the encoder, for transmission. An inverting quantifying module produces the quantified difference signal from the ADPCM output signal. The estimated value of the input signal, estimated signal, is added to this quantified difference signal in order to produce a reconstructed version of the input signal. Both the reconstructed signal and the quantified difference signal are applied to a prediction module that produces the input estimated signal, thereby completing the feedback loop.

The coefficients of the algorithm which define the estimated signal are calculated on the basis of the output values of a number of delay modules, memory banks, that are incorporated in the prediction module. The delay modules are all read successively when the following frame sample arrives. Once the estimated signal is generated, it is subtracted from the input signal, forming the difference signal that gives rise to the new ADPCM output signal. The algorithm is complemented with the performance of all operations necessary to prepare the prediction module prior to the arrival of the new sample.

The set of operations required to process a sample and leave the prediction module ready until the next frame is extremely large, requiring a great number of clock cycles for each sample of a channel and thereby limiting the number of channels that an ADPCM encoder can process.

### CHARACTERISATION OF THE INVENTION

The object of the invention is to speed up the ADPCM encoding and decoding processes of the channel sample in order to achieve processing of the maximum number of channels per frame, since, by reducing the processing time of a sample, the number of samples that can be processed per frame is increased, which is equivalent to increasing the number of channels that an ADPCM encoder/decoder can handle.

An ADPCM encoder receives an input signal, PCM coded word, and produces a quantified difference signal by subtracting an estimated value of this signal from the input signal, such that a feedback loop is formed. The ADPCM encoding method of the invention brings forward the calculation of the coefficients of the signals, estimated signal and partial estimated signal of the sixth order prediction process, to the preceding frame, such that they are evaluated in parallel with other operations without significantly increasing the number of clock cycles employed in performing them.

In the current frame the values of these two signals of the procedure are available from the beginning of the calculation and the algorithm starts on the arrival of the input signal, the following frame sample. Thus, the overall encoding process of a sample is speeded up and, consequently, the ADPCM encoder/decoder that implements the adaptive differential pulse code modulation method of the invention processes a greater number of channels per frame.

### BRIEF FOOTNOTES TO THE FIGURES

A fuller explanation of the invention is given in the description that follows, based on the figures attached in which:
- figure 1 shows a functional block diagram of an ADPCM encoder in accordance with the prior art, complying with the CCITT Recommendations G.726 or G.727,
- figure 2 shows a functional block diagram of a prediction module in accordance with the prior art, complying with the CCITT Recommendations G.726 or G.727,
- figure 3 shows a functional block diagram of a prediction module in accordance with the invention, and
- figure 4 shows a detailed functional block diagram of a prediction module in accordance with the invention.

### DESCRIPTION OF THE INVENTION

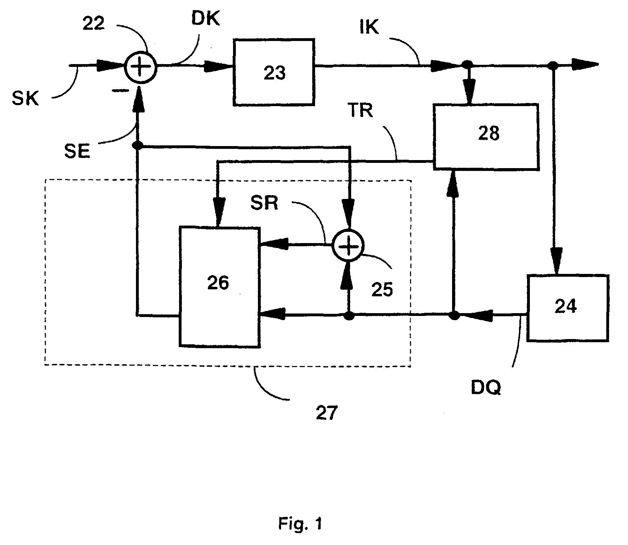

Figure 1 shows a functional block diagram of a ADPCM encoder complying with the CCITT Recommendations G.726 or G.727. The ADPCM encoder includes several functional modules, there being an adding device 22, an adapative quantifier 23, an inverse adapative quantifier 24, an adpatation control element 28 and a prediction element 27. The operation of each of these functional modules is well known and described in the CCITT Recommendations G.726 or G.727.

The prediction module 27 includes an adaptive prediction element 26 which produces an estimated signal SE for the sample of the current frame Fy, from a quantified difference signal DQ and the estimated signal SE of the previous frame Fy-1. The estimated signal SE is subtracted, in a first adding device 22, from an input signal SK, PCM coded word, encoded according to A law or µ law, producing a difference signal DK.

The adaptive quantifier 23 scales the signal DK in order to quantify it and produce an output signal IK, ADPCM coded word, which is transmitted over the transmission line or trunk. The inverse adapative quantifier module 24 takes the output signal IK and generates the quantified difference signal DQ; in a second adding device 25 this signal DQ is added to the estimated signal SE to produce the reconstructed signal SR which is applied to the adaptive prediction element 26. The adaption control module 28 takes the quantified difference signal DK and the output signal IK to produce a control signal TR that controls the internal adaption process of the prediction module 27.

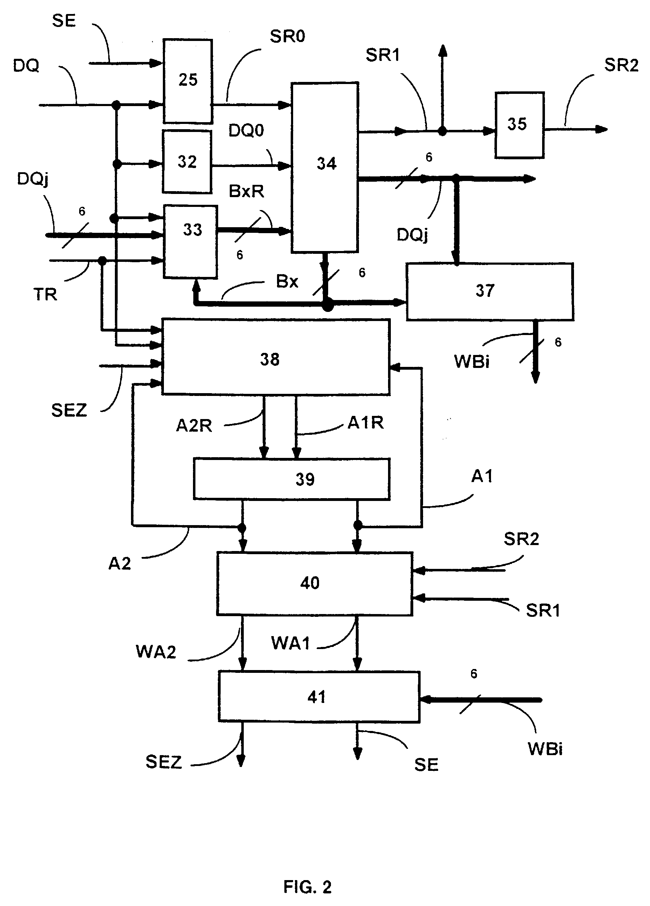

Figure 2 shows a functional block diagram of a prediction module 27 which includes an adaptive prediction element and a second adding device 25.

The adaptive prediction element generates the estimated signal SE in a calculator module 41 the input of which is formed by a number of signals WA1, WA2 and Wbi (y=1,..,6) which are partial products of the estimated signal SE. This module 41 has a second output signal, partial estimated signal of the sixth order prediction process SEZ, which is an internal signal of the adaptive prediction element.

The first coefficients module 38 calculates a first set of coefficients AnR (n=1, 2) from the partial estimated signal of the sixth order prediction process SEZ, of the quantified difference signal DQ, of the control signal TR and of the first set of delayed coefficients An (n=1, 2) corresponding to the previous frame Fy-1, which are stored in a third delay module 39 until they are read.

The estimated signal SE is a function of the partial estimated signal of the sixth order prediction process SEZ, of the reconstructed signal and of the first set of delayed coefficients An (n=1, 2).

The second adder 25 produces a reconstructed signal SR0 (reconstructed signal SR without delay), which is applied to a first delay module 34 to produce a reconstructed signal with delay SR1. This signal SR1 is applied to a second delay module 35 from which is obtained another reconstructed signal with two delays SR2. In the current frame Fy, these two signals SR1, SR2 are introduced along with coefficients A1, A2 into a first multiplier module 40 that produces the partial products WA1, WA2 which are added to the partial products WBi in the calculator module 41, resulting in the estimated signal SE and the partial estimated signal of the sixth order prediction process SEZ.

The partial estimated signal of the sixth order prediction process SEZ is a function of the quantified difference signal DQ and of a second set of delayed coefficients Bx (x=1,..,6). A second coefficients module 33 is used to calculate the previous coefficients with delay BxR (x=1,..,6) which are stored until read by the first delay module 34. Other outputs of this module 34 are the second set of delayed coefficients Bx. Another input of the delay module 34 is a quantified difference signal without delay DQ0 which is generated in a converter module 32 the input of which is the quantified difference signal DQ.

The second coefficients module 33 has, for input signals, the quantified difference signal DQ, the control signal TR and a number of delayed quantified difference signals DQj (j=1,..,6) with delays 1 to 6. The delayed quantified difference signals DQj are generated in the first delay module 34. Also the second set of delayed coefficients Bx are input signals to the coefficients module 33.

The delayed coefficients Bx are also introduced along with the delayed difference signals DQj into a second multiplier module 37, which produces the partial products WBi.

Under operating conditions, a channel sample arrives, in a frame Fy, the different signals and coefficients corresponding to this channel being read from the corresponding delay modules, being used to calculate the estimated signal SE and partial estimated signal from the sixth order prediction process SEZ.

Once the estimated signal SE is produced, the output signal IK is calculated. When all the input signals to the adaptive prediction module 26, particularly the quantified difference signal DQ and the control signal TR, are updated, the new coefficients and the delay module signals can be generated and stored until they are read on the arrival of a new channel sample in the following frame Fy+1.

In order to speed up the encoding process and since the multiplier modules 40, 37 are the slowest, the two signals SE and SEZ are calculated in the current frame Fy for the following frame Fy+1, given that the coefficients necessary for calculating them are available, the results being stored in a fourth delay module 42 until they are read in the new frame Fy+1. Thus, the operation of the modules 40, 37 takes place in parallel with other operations necessary in the adaption control module 28.

When the sample of frame Fy+1 arrives, the fourth module 42 is read, giving rise to the process of calculating the output signal IK of the ADPCM encoder, since the estimated signal SE and partial estimated signal of the sixth order prediction process SEZ are available. The rest of the coefficients and the signals SE and SEZ for the new sample are calculated in parallel.

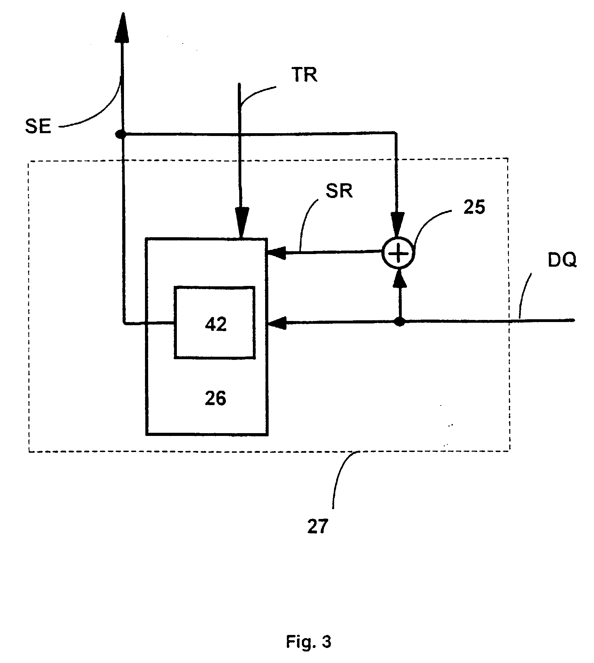

Figure 3 shows a functional block diagram of a prediction module 27 in accordance with the invention. The adaptive prediction element 26 also includes a fourth delay module 42, such that from it can be read the estimated signal SE and the partial signal from the sixth order prediction process SEZ, when a sample arrives in the following frame Fy+1, without having to wait for them to be calculated by the adaptive prediction element 26.

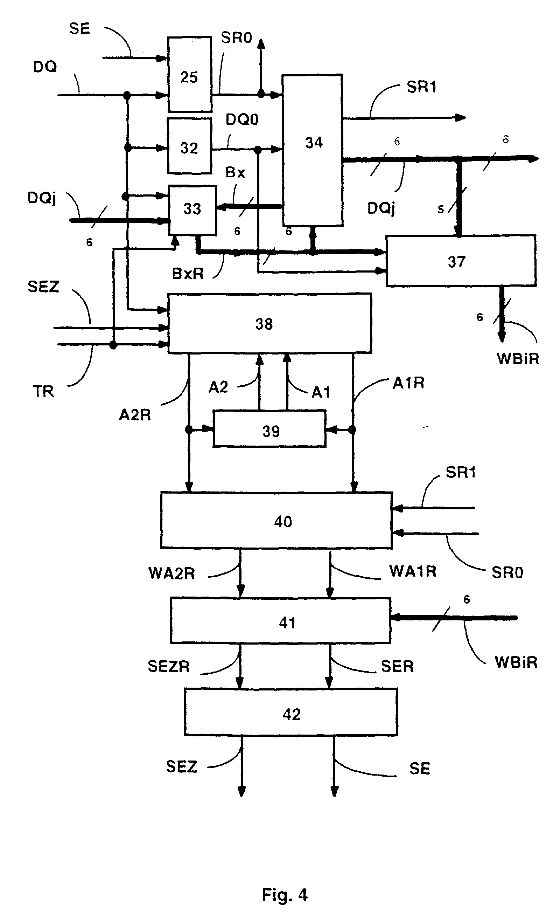

Figure 4 shows a detailed functional block diagram of a prediction module in accordance with the invention. This module includes a fourth delay module 42 which forces the multiplier modules 40, 37 to use the values of their inputs before being stored for delay. Thus the second delay module 35 has been eliminated. Consequently the reconstructed signal with one delay SR1 is applied directly to the first multiplier module 40. In addition, this multiplier module 40 also receives the reconstructed signal without delay SR0. The adaptive prediction module according to the invention does not generate the reconstructed signal with two delays SR2.

Likewise the first set of coefficients A1R, A2R are introduced into the first multiplier 40, obtaining new partial products WA1R, WA2R which are applied to the calculator module 41. This module 41 also receives new partial products WBiR generated in the second multiplier module 37. The output signals SER, SEZR obtained in the calculator module 41 are stored in the fourth delay module 42 until they are read.

On the other hand, the second multiplier module 37 does not receive the second set of delayed coefficients Bx, but it does receive the previous undelayed coefficients BxR. Also the second multiplier 37 receives the undelayed quantified difference signal DQ0 and the delayed quantified difference signals DQj, except for the quantified difference signal DQ6 (with six delays).

When connecting the different modules of the prediction module in the way described above, this generates the estimated signal SE and the partial estimated signal of the sixth order prediction process SEZ corresponding to the following frame Fy+1 in the process of setting up the prediction module corresponding to the current frame Fy, these being stored until they are read in the fourth delay module 42. Thus, with these signals being available from the moment a new sample arrives, the encoding algorithm starts up immediately, speeding up both processes in an overall manner, since operations are carried out in parallel. The processing time of a sample is therefore reduced and it is possible to process more channels per frame.

In the case of an ADPCM decoder, this has a part which is identical to that which constitutes the feedback loop of the ADPCM encoder and, consequently, the prediction module 27 according to the invention is applicable to it. There is also an increase in the number of channels that can be processed.

## Claims

1. **METHOD OF CODING BY ADAPTIVE DIFFERENTIAL PULSE CODE MODULATION, ADPCM,** which substantially meets the Recommendations of the CCITT, G.726 or G.727; in which from an input signal (SK) a quantified difference signal (DQ) is obtained by subtracting from the input signal (SK) an estimated value of this signal, the estimated signal (SE), such that a feedback loop is formed, **characterised** in that the estimated signal (SE) and a partial estimated signal from the sixth order prediction process (SEZ) for a sample of a determined frame (Fy) are calculated in the previous frame (Fy-1).

2. **ENCODING METHOD** in accordance with claim 1, **characterised** in that the estimated signal (SE) and the partial estimated signal of the sixth order prediction process (SEZ), calculated in the preceding frame (Fy-1), are read in a fourth delay module (42), at the commencement of processing the current frame (Fy).

3. **ENCODING DEVICE** which implements a method of coding by adaptive differential pulse code modulation, ADPCM, which includes in the feedback loop a prediction module (27), **characterised** in that the prediction module (27) also includes a fourth delay module (42) the outputs of which are the estimated signal (SE) and the partial estimated signal of the sixth order prediction process (SEZ).
